Europäisches Patentamt

(19) European Patent Office

Office européen des brevets

(11) Veröffentlichungsnummer: **0 092 726**
B1

(12) **EUROPÄISCHE PATENTSCHRIFT**

(45) Veröffentlichungstag der Patentschrift:
23.10.85

(51) Int. Cl.⁴: **C 08 G  81/02**

(21) Anmeldenummer: 83103488.9

(22) Anmeldetag: 11.04.83

(54) **Verfahren zur Herstellung von Blockcopolymeren auf der Basis von Ethylenpolymerisaten und anderen Polymeren.**

(30) Priorität: 22.04.82  DE 3214980

(43) Veröffentlichungstag der Anmeldung:
02.11.83 Patentblatt 83/44

(45) Bekanntmachung des Hinweises auf die Patenterteilung:
23.10.85 Patentblatt 85/43

(84) Benannte Vertragsstaaten:
AT BE DE FR GB NL

(56) Entgegenhaltungen:
EP - A - 0 036 279
DE - A - 1 769 403
DE - A - 1 795 353
GB - A - 1 079 749

(73) Patentinhaber: BASF Aktiengesellschaft,
Carl-Bosch-Strasse 38, D-6700 Ludwigshafen (DE)

(72) Erfinder: Brandstetter, Franz, Dr., Ritterbueschel 45,
D-6730 Neustadt (DE)
Erfinder: Hambrecht, Juergen, Dr., Werderstrasse 30,
D-6900 Heidelberg (DE)
Erfinder: Werner, Michael, Dr., Harzburger Weg 21,
D-6800 Mannheim 33 (DE)
Erfinder: Ziegler, Walter, Dr., Starenweg 15,
D-6803 Edingen-Neckarhausen (DE)

BUNDESDRUCKEREI BERLIN

# 0 092 726

## Beschreibung

Die Erfindung betrifft ein Verfahren zur Herstellung von Blockcopolymeren auf der Basis von Ethylencopolymerisaten, die mindestens eine funktionelle Gruppe aus der Reihe der Alkohole einpolymerisiert enthalten und anderen Polymeren.

Bei derartigen Blockcopolymeren handelt es sich um Polymere, in denen neben normalen Copolymeren, die aus Ethylen und einem mit Ethylen copolymerisierbaren Monomer aufgebaut sind, homo- oder copolymere Kettenabschnitte oder Blöcke anderer Monomerer enthalten sind.

Blockcopolymerisate auf der Basis von Ethylen sind aus der Literatur bekannt. Sie werden u. a. durch die radikalische Polymerisation verschiedener Monomerer in Gegenwart von Polyethylen hergestellt, wie es beispielsweise von Renfrew und Morgan in »Polythene« (1960), Seiten 373 bis 376, Verlag lliffe & Sons Ltd., London, beschrieben ist.

Des weiteren kennt man Blockcopolymere auf der Basis von Ethylen mit Polyamiden, die durch die Umsetzung von nitrosierten Carbonamidgruppen enthaltenden Polyamiden erhalten werden (vgl. DE-PS 11 22 696).

Im Falle der Polyamide ist ein zusätzlicher Reaktionsschritt nötig. Bei der Herstellung der mit radikalisch polymerisierbaren Monomeren produzierbaren Blockpfropfcopolymeren werden recht heterogene Produkte erhalten. Des weiteren ist dieses Verfahren nur bei radikalisch polymerisierbaren Monomeren möglich.

Es ist auch schon vorgeschlagen worden, zur Herstellung von Blockcopolymeren auf der Basis von Ethylencopolymerisaten die Ethylencopolymerisate mit lebenden polymeren Anionen, erhalten aus ethylenisch ungesättigten, anionisch polymerisierbaren Monomeren, umzusetzen (vgl. DE-OS 3 150 171). Bei diesem Verfahren muß stets unter Ausschluß von Luft und Feuchtigkeit in einem organischen Lösungsmittel gearbeitet werden.

Der Erfindung lag die Aufgabe zugrunde, ein einfaches Verfahren zur Herstellung von Blockcopolymeren auf der Basis von Ethylencopolymerisaten aufzufinden.

Diese Aufgabe wurde durch ein Verfahren gelöst, bei dem Ethylencopolymerisate mit Polymeren umgesetzt werden, die mindestens eine funktionelle Gruppe aus der Reihe der Isocyanate, Halogene, Säuren bzw. Säurederivate und Epoxide aufweisen.

Nach bevorzugter Verfahrensweise ist das Ethylencopolymerisat ein Methylbutenol enthaltendes Copolymerisat des Ethylens.

Bevorzugt ist auch ein Verfahren, bei dem die Polymeren nur eine funktionelle Gruppe aus der Reihe der Isocyanate, Säuren bzw. Säurederivate oder Epoxide aufweisen.

Besonders bevorzugt ist ein Verfahren, bei dem die Polymeren je eine funktionelle Endgruppe aus der Reihe der Isocyanate, Halogene, Säuren bzw. Säurederivate oder Epoxide aufweisen und ein Monoisocyanat von Poly(carbonat), Poly(phenylenoxid), Poly(ester), Poly(ethylenglykolmonoether), Poly(ethylenglykolmonoester), Poly(propylenglykolmonoether), Poly(propylenglykolmonoester), Polybutadiene, Polystyrol oder Polyisobutylen sind. Durch das Verfahren werden Blockcopolymere der allgemeinen Formel erhalten:

$$[(A_n)_i(B_l)_k(C_m)_j],$$

wobei A gleich Ethylen und ein mit Ethylen copolymerisierbares Monomeres aus der Reihe der (Meth)-Acrylate, der Vinylester, Vinylether, der ungesättigten Säuren, Nitrile, Amide, Vinylsilane und Kohlenmonoxid, B ein mit Ethylen copolymerisierbares, eine Gruppe aus der Reihe der Alkohole tragendes Monomer, $C_m$ ein Polymerrest eines Stammpolymeren, das mindestens eine funktionelle Gruppe aus der Reihe der Isocyanate, Halogene, Säuren bzw. Säurenderivate oder Epoxide trug, n und m eine ganze Zahl größer als 30, l i, k und j eine ganze Zahl gleich oder größer als 1 und k, l gleich oder größer j ist. Bei A sind mindestens 30 Gew.-%, vorzugsweise mindestens 50 Gew.-% Ethylen. Ganz besonders ist Ethylen allein bevorzugt. Bei den unter A verwendeten Comonomeren handelt es sich beispielsweise um Methylacrylat, Ethylacrylat, n-Butylacrylat, t-Butylacrylat, Ethylhexylacrylat, Laurylacrylat, Methylmethacrylat, Vinylacetat, Vinylpropionat, Vinylbutyrat, Methylvinylether, Acrylsäure, Acrylnitril, Acrylsäuredimethylamid oder Kohlenmonoxid.

Bei B wird bevorzugterweise Methylbutenol verwendet. Bei $C_m$ handelt es sich um Polymerreste, die beispielsweise aus folgenden Stammpolymeren herrühren können: Polycarbonate, Polsulfone, Polyethersulfone, Polyether, Polyoximethylene, voll oder partiell verseifte Polyvinylacetate, um partiell oder nicht veretherte und/oder veresterte Cellulose, um Polymere mit Isocyanat-, Anhydrid- bzw. Epoxid-Gruppen aus der Reihe der Polybutadiene, Polyisobutylene, Polyisoprene, Polystyrole, Polystyrolacrylnitrile, Poly(meth)acrylate, um Polyester, Polyurethane, Phenoplaste, Polyesteramide, Polyamide, Polyethylenimine und Polytetrahydrofuran. Als besonders geeignet werden Monoisocyanate von Poly(carbonaten), Poly-(phenylenoxiden), Monoether bzw. Monester von Poly(ethylenglykol), Polybutadien und Polystyrol. Derartige Polymere sind beispielsweise beschrieben in Houben-Weyl, »Methoden der organischen Chemie«, Band 14/2 (1963), S. 666, 57—98, 495—496, Verlag Georg Thieme, Stuttgart, J. Polym. Sci. Polym. Chem. Ed. Vol. 19, 2119—2122 (1981), Vol. 16, 3163—3172 (1978), Vol. 17, 3095—3119 (1979), Polymer Letters Vol. 7, 569—572 (1969), US-PS 3 336 276, Ind. Eng. Chem. 49 (1957)

2

803, Polymer Letters Vol. 10, 679 (1972).

Die erfindungsgemäß zu verwendenden Ethylencopolymerisate, die mindestens eine funktionelle Gruppe aus der Reihe der Alkohole enthalten, sind an sich bekannt (vgl. Renfrew u. Morgan, »Polythene«, [1960], Seiten 345 bis 369, Verlag Iliffe & Sons Ltd. London oder Yocum, DE-PS 17 69 403 und US-PS 3 201 374). Die Herstellung der Ethylenpolymerisate kann nach herkömmlichen Verfahren im Autoklaven und/oder rohrförmigen Polymerisationssystem bei Drücken von 150 bis 5000 bar und Temperaturen von 40 bis 450° C in Gegegenwart radikalisch zerfallender Polymerisationsinitiatoren erfolgen (vgl. Ullmanns Encyclopädie der Technischen Chemie, Band 19, (1980), Seiten 167 bis 226).

Die Ethylencopolymerisate haben eine Dichte im Bereich von 0,910 bis 0,965, insbesondere 0,915 bis 0,960 g/cm$^3$. Die Schmelzindices der Ethylencopolymerisate, gemessen bei 190° C und einem Auflagegewicht von 2,16 kp, liegen oberhalb von 0,01 g/10 min. Die Ethylencopolymerisate weisen die allgemeine Formel

$$[(A_n)_i (B_l)_k]$$

auf, wobei A gleich Ethylen und gegebenenfalls ein mit Ethylen copolymerisierbares Monomeres aus der Reihe der (Meth)-Acrylate, der Vinylester, Vinylether, der ungesättigten Säuren, Nitrile, Amide, Vinylsilane und CO, B ein mit Ethylen copolymerisierbares, eine Gruppe aus der Reihe der Alkohole tragendes Monomer, n eine ganze Zahl größer als 30, l, i und k eine ganze Zahl gleich oder größer als 1 ist. Die Zahlen für n und l entsprechen dem Polymerisationsgrad, die Zahlen für i und k der Blockanzahl im Copolymerisat.

Für das erfindungsgemäße Verfahren besonders geeignet sind Copolymerisate des Ethylens mit 3-Methyl-buten-3-ol-1, die in der DE-OS 32 12 748 beschrieben.

Nach dem erfindungsgemäßen Verfahren die in Frage kommenden Ethylencopolymerisate in Lösung oder in Schmelze, bevorzugt unter Sauerstoffausschluß, mit den Polymeren, die eine funktionelle Gruppe aus der Reihe der Isocyanate, Halogene, Säuren bzw. Säurederivate oder Epoxide enthalten, umgesetzt. Die Umsetzung erfolgt dabei unter den üblichen Bedingungen, wie sie beispielsweise für die Herstellung von Estern, Urethanen, Ethern in dem Lehrbuch »Organikum«, VEB Deutscher Verlag der Wissenschaften, 1968, zitiert sind. Man kann aber auch in einem Zweiphasensystem in Gegenwart von Phasentransferkatalysatoren, wie quartären Ammonium-, Phosphonium- und tertiären Sulfonium-Verbindungen arbeiten (vgl. E. V. Dehmlow, New Synthetic Methods Vol. 1 (1975), S. 1 und Vol. 6 (1979), S. 205, Verlag Chemie Weinheim). Die Umsetzung der Ethylencopolymerisate mit den funktionellen Gruppen enthaltenden Polymeren kann aber auch in der Schmelze erfolgen; die Mischung der Schmelzen wird dabei bevorzugt auf stark homogenisierenden Mischaggregaten, wie Extrudern oder Walzen, vorgenommen.

Die auf diesem Weg erhaltenen Blockcopolymerisate sind vom allgemeinen Typ

$$[(A_n)_i (B_l)_k (C_m)_j].$$

Die erfindungsgemäß erhaltenen Blockcopolymerisate sind Polymerisate mit einer Vielfalt von Eigenschaften und zeigen eine Reihe von Vorteilen gegenüber bisher bekannten Blockcopolymerisaten. Sie können auf herkömmlichen Maschinen durch Formblasen, Extrusion oder Spritzguß verarbeitet werden. Sie können alleine, insbesondere als Schmelzhaftkleber, als Mineralöladditive oder in Kombination mit anderen Thermoplasten zur Verbesserung der Zähigkeit, Fließeigenschaften und des Oberflächenbildes verwendet werden.

Die Erfindung wird an Hand von Beispielen erläutert.

## Beispiele

Als Ethylencopolymere fanden Produkte Verwendung, die nach dem Hochdruckprozeß in Autoklaven oder rohrförmigen Polymerisationssystemen erhalten wurden. Der Çomonomeranteil, Dichte und Schmelzindex sind in der Tabelle aufgeführt.

Als Polymere mit einer funktionellen Gruppe fanden Verwendung

1. Polyisobutylen mit einer Isocyanatgruppe mit einem mittleren Molekülgewicht von 1000, wie in J. of Polym. Sci. Polym. Chem. Ed. Vol. 19 (1981), S. 2119—2122, beschrieben
2. Polybutadien mit einer Isocyanatendgruppe und einem mittleren Molekulargewicht von 10 000.
3. Polybutadien mit einer Epoxidendgruppe und einem mittleren Molekulargewicht von 5000.

## Herstellung der Blockpolymerisate

Das Ethylencopolymerisat, das 8 Stunden bei 90° C im Vakkum bei 133 Pa (1 Torr) getrocknet wurde, wurde in trockenem Ethylbenzol bei 80 bis 110° C unter Stickstoff gelöst.

**0 092 726**

## Beispiele 1—7

Zu der in der Tabelle angegebenen Menge von Ethylencopolymerisat (ca. 10%ig in Ethylbenzol) wurden unter Stickstoff die in der Tabelle angegebene Menge eines Polyisobutylens mit einer Isocyanatgruppe und 2 Gewichtsteile Pyridin unter Rühren gegeben. Man rührte 4 Stunden bei 160°C, ließ abkühlen, fällte in Methanol aus, saugte ab und trocknete bei 60°C im Vakuum bei 133 Pa (1 Torr).

Zur Bestimmung des Umsatzes wurden 5 g des Blockcopolymerisats 5 Stunden bei 23°C in 100 ml Methylenchlorid gerührt. Man dekantierte und wiederholte den Vorgang noch zweimal. Dann wurde nach dem Abdampfen des Lösungsmittels der unlösliche Anteil bestimmt. Hieraus wurde der Umsatz folgendermaßen ermittelt:

$$\text{Umsatz} = \frac{100 \cdot A}{5}$$

A = unlöslicher Anteil.

## Beispiel 8

Zu der in der Tabelle angegebenen Menge an Ethylencopolymerisat (ca. 10%ig in Ethylbenzol) wurden unter Stickstoff die in der Tabelle angegebene Menge an Polybutadien mit einer Isocyanatgruppe (ca. 10%ig in Ethylbenzol) und 0,5 Gewichtsteile Dibutylzinndilaurat unter Rühren gegeben. Man rührte 2 Stunden bei 60°C, ließ abkühlen, fällte in Methanol aus, saugte ab und trocknete im Vacuum bei 133 Pa (1 Torr).

Die Bestimmung des Umsatzes erfolgte wie in den Beispielen 1 bis 7 beschrieben, mit der Ausnahme, daß Tetrahydrofuran als Extraktionsmittel verwendet wurde.

## Beispiel 9

Zu der in der Tabelle angegebenen Menge an Ethylencopolymerisat (ca. 10%ig in Ethylbenzol) wurden unter Stickstoff und Wasserausschluß die in der Tabelle angegebene Menge an Polybutadien mit einer Epoxidgruppe (ca. 10%ig in Ethylbenzol) und 0,1 Gewichtsteile Bortrifluoridetherat unter Rühren gegeben. Man rührte 3 Stunden bei 80°C. Nach dem Abkühlen wurde das Reaktionsprodukt mit Methanol ausgefällt, abgesaugt und im Vakuum bei 60°C und 133 Pa (1 Torr) getrocknet. Die Bestimmung des Umsatzes erfolgte wie in Beispiel 8 beschrieben.

Die Ermittlung des Schmelzindex erfolgte bei 190°C und 2,16 kp nach DIN 53 735, die der Dichte nach DIN 53 479.

4

Tabelle

| Beispiele (erfin- dungsge- mäß) | Ethylencopolymerisat Comonomeres | [Gew.-%] | Dichte [g/cm³] | Schmelzindex 190°C/216 kp [g/10 min] | Gew.-Tle. | Polymer mit funk- tioneller Gruppe Art | [Gew.-Tle.] | Blockcopolymerisat Reaktions- temperatur [°C] | Reaktions- zeit [Std.] | Umsatz [%] |
|---|---|---|---|---|---|---|---|---|---|---|
| 1 | 3-Methyl-buten-3-01-1 | 1 | 0,918 | 2 | 90 | 1 | 1 | 100 | 4 | 92 |
| 2 | | 1 | 0;918 | 2 | 90 | 1 | 2,5 | 100 | 9 | 90 |
| 3 | | 1 | 0,918 | 2 | 90 | 1 | 5,0 | 100 | 9 | 75 |
| 4 | | 2 | 0,924 | 8 | 120 | 1 | 3 | 100 | 9 | 93 |
| 5 | | 2 | 0,924 | 8 | 120 | 1 | 5,0 | 100 | 9 | 87 |
| 6 | | 4 | 0,920 | 32 | 100 | 1 | 5,0 | 100 | 9 | 95 |
| 7 | | 4 | 0,920 | 32 | 100 | 1 | 7,5 | 100 | 9 | 89 |
| 8 | | 2 | 0,924 | 2 | 120 | 2 | 50 | 60 | 2 | 79 |
| 9 | | 2 | 0,924 | 8 | 120 | 3 | 20 | 80 | 3 | 78 |

**Patentansprüche**

1. Verfahren zur Herstellung von Blockcopolymeren auf der Basis von Ethylencopolymerisaten, die mindestens eine funktionelle Gruppe aus der Reihe der Alkohole einpolymerisiert enthalten und anderen Polymeren, dadurch gekennzeichnet, daß die Ethylencopolymerisate mit Polymeren umgesetzt werden, die mindestens eine funktionelle Gruppe aus der Reihe der Isocyanate, Halogene, Säuren bzw. Säurederivate oder Epoxide, aufweisen.

2. Verfahren nach Anspruch 1, dadurch gekennzeichnet, daß das Ethylencopolymerisat ein Methylbutenol enthaltendes Copolymerisat des Ethylens ist.

3. Verfahren nach Anspruch 1, dadurch gekennzeichnet, daß die Polymeren nur eine funktionelle Gruppe aus der Reihe der Isocyanate, Säuren bzw. Säurederivate oder Epoxide aufweisen.

4. Verfahren nach Ansprüchen 1 und 3, dadurch gekennzeichnet, daß die Polymeren je eine funktionelle Endgruppe aus der Reihe der Isocyanate, Halogene, Säuren bzw. Säurederivate oder Epoxide aufweisen und Monoisocyanat von Poly(carbonat), Poly(phenylenoxid), Poly(ester), Poly(ethylenglykolmonoether), Poly(ethylenglykolmonoester), Poly(propylenglykolmonoether), Poly(propylenglykolmonoester), Poly(butadien), Polystyrol oder Polyisobutylen sind.

**Claims**

1. A process for the preparation of block copolymers based on ethylene copolymers, containing copolymerized units of at least one functional group selected from the group consisting of alcohols, and other polymers, wherein the ethylene copolymers are reacted with polymers having at least one functional group selected from the group consisting of isocyanates, halogens, acids, acid derivatives and epoxides.

2. A process as claimed in claim 1, wherein the ethylene copolymer is one which contains methyl butenol.

3. A process as claimed in claim 1, wherein the polymers have only one functional group selected from the group consisting of isocyanates, acids, acid derivates and epoxides.

4. A process as claimed in claims 1 and 3, wherein the polymers each have a functional end group selected from the group consisting of isocyanates, halogens, acids, acid derivatives and epoxides, and are monoisocyanates of polycarbonates, polyphenylene oxide, polyesters, polyethylene glycol monoethers, polyethylene glycol monoesters, polypropylene glycol monoethers, polypropylene glycol monoesters, polybutadiene, polystyrene or polyisobutylene.

**Revendications**

1. Procédé de préparation de copolymères de l'éthylène, dans lesquels est copolymérisé au moins un groupe fonctionnel dérivé de la série des alcools, et d'autres polymères , caractérisé en ce que l'on fait réagir les copolymères éthyléniques avec des polymères contenant au moins un groupe fonctionnel choisi parmi les isocyanates, les halogènes, les acides et dérivés d'acides et les époxydes.

2. Procédé suivant la revendication 1, caractérisé en ce que le copolymère éthylénique est un copolymère de l'éthylène et du méthyl-buténol.

3. Procédé suivant la revendication 1, caractérisé en ce que les polymères ne contiennent qu'un seul groupe fonctionnel dérivé d'un isocyanate, d'un acide ou dérivé d'acide ou d'un époxyde.

4. Procédé suivant les revendications 1 et 3, caractérisé en ce que les polymères contiennent un groupe fonctionnel terminal dérivé d'un isocyanate, d'un halogène, d'un acide ou dérivé d'acide ou d'un époxyde et sont choisis parmi les mono-isocyanates d'un poly-carbonate, d'un poly(oxyde de phénylène), d'un poly-ester, d'un mono-éther de poly(éthylène-glycol), d'un mono-ester de poly(éthylène-glycol), d'un mono-éther ou mono-ester de poly(propylène-glycol), d'un polybutadiène, d'un polystyrène et d'un poly-isobutylène.